# EUROPEAN PATENT SPECIFICATION

(11) **EP 3 753 404 B1**
(45) Date of publication and mention of the grant of the patent: **07.06.2023**
(21) Application number: 19180646.2
(22) Date of filing: 17.06.2019
(51) Int. Cl.: A01M 7/00

(54) **AN ASSEMBLY FOR AN EXTENDABLE AND RETRACTABLE BOOM OF AN AGRICULTURAL MACHINE AND AGRICULTURAL SPRAYER**
ANORDNUNG FÜR EINEN AUS- UND EINZIEHBAREN AUSLEGER EINER LANDWIRTSCHAFTLICHEN MASCHINE UND LANDWIRTSCHAFTLICHE SPRITZE
ENSEMBLE POUR FLÈCHE EXTENSIBLE ET RÉTRACTABLE D'UNE MACHINE AGRICOLE ET PULVÉRISATEUR AGRICOLE

(43) Date of publication of application: 23.12.2020
(73) Proprietor: Kverneland Group Nieuw-Vennep B.V., 2153 LR Nieuw-Vennep (NL)
(72) Inventor: VEDDER, Gert-Jan, 2153 LR Nieuw-Vennep (NL)
(74) Representative: Bittner, Thomas L.

(56) References cited:
- WO-A1-2015/082121
- US-A- 4 709 857
- US-A- 5 988 528
- US-A1- 2014 366 460
- US-A1- 2016 038 961
- US-A1- 2018 184 638
- US-A1- 2018 184 638
- US-A1- 2019 129 375
- US-B1- 6 719 213
- US-B1- 6 719 213

## Description

The present disclosure refers to an assembly for an extendable and retractable boom of an agricultural machine and an agricultural sprayer.

### Background

Booms or boom systems are used in different types of agricultural machines. For example, extendable and retractable booms are applied for configuring the agricultural machine for different working situations. By extending and retracting the boom, for example, different working widths can be provided for the agricultural machine. Such booms or boom systems are applied for example in agricultural sprayers provided for distributing liquid material such as herbicide, pesticide, or fertilizer.

For extending and retracting the boom, boom sections are relocated by relative movement, specifically by relative rotational movement or pivoting. For example, a 180 degrees rotational movement may be applied to adjacent boom sections for extending and retracing the boom. The two boom sections to be moved by rotational movement are connected by an articulation or articulating joint allowing rotational movement between the boom sections. An actuator mechanism is applied for driving relative movement between the boom sections. The actuator mechanism works together with hinged elements for accomplishing the 180 degrees rotational movement between the neighbouring boom sections for extending and retracing the boom.

Document WO 2015 / 082121 A1 discloses an agricultural sprayer comprising an applicator boom having a centre boom frame and a pair of multi-section boom side assemblies. Each side assembly is mounted by a respective hinge to the centre boom frame. Neighbouring boom sections are mutually connected by a hinged joint which permits folding around an upright axis from a deployed operating configuration to a transport configuration. A spring and damper mechanism is associated with the hinged joint for controlling pivoting movement around the upright axis between said two boom sections.

Document US 2014 / 366460 A1 discloses an improved agricultural spray boom having a primary section, a secondary section and a break away section. The primary section has a top extrusion having a web and two tubes, each tube having a heat sink and a wing. No welds are located above the centerline of the tubes where stress would be the greatest. The secondary section is pivotally attached to the primary section. Weight of the second section and break away section cause a twisting force to be applied to the primary section. The primary section has specially oriented side braces which act in compression to resist the twisting force. The primary section further has a steel connector connected to the underside of the extrusions (and not welded to top of extrusions). The secondary section also has a top extrusion with a web and two tubes.

Document US 5 988 528 A refers to a self-centering boom for self-propelled agricultural sprayers having a double-acting hydraulic cylinder and a magnetically actuated electrical position sensor and control for sensing and moving the boom to a centered position. The electro-hydraulic control circuit senses boom position when the boom is at or near a centered position with respect to the sprayer and automatically centers the boom when the sprayer drive train is out of a neutral condition. The hydraulic system includes a pair of pressure relief valves to allow the boom to deflect due to inertial forces when turning or when contact is made with an obstruction, with the control system returning the boom to a centered position after turning or when the boom is clear of the obstruction. A flow restricting orifice cooperates with the pressure relief valves to automatically adjust the pressure at the inlet of the relief valve to retard rapid boom movement, while not interfering with slow boom movement.

### Summary

It is an object to provide an assembly for an extendable and retractable boom for an agricultural machine and an agricultural sprayer having improved functionality for accomplishing movement between adjacent boom sections for extending and retracing the boom.

For solving the problem, an assembly for an extendable and retractable boom of an agricultural machine and an agricultural sprayer according to claims 1 and 10, respectively, are provided. Additional embodiments are disclosed in dependent claims.

According to an aspect, an assembly for an extendable and retractable boom of an agricultural machine is provided. The assembly comprises: a first boom section having a first frame structure comprising a plurality of frame elements; a second boom section connected to the first boom section by an articulating joint configured to allow 180 degrees rotational movement between the first and second boom sections, thereby, relocating the first and second boom sections between an extended boom section arrangement and a retracted boom section arrangement; an arrangement of hinged elements connected to both the first and the second boom sections; and an actuator mechanism, the actuator mechanism comprising an actuator received inside the first frame structure of the first boom section and functionally connected to the arrangement of hinged elements, wherein the actuator mechanism and the arrangement of hinged elements are configured to produce the 180 degrees rotational movement between the first and second boom sections, and the actuator is configured to drive the 180 degrees rotational movement. The actuator is prevented by a limiting device from rotational movement while driving the 180 degrees rotational movement between the first and second boom sections.

According to another aspect, an agricultural sprayer is provided, comprising an extendable and retractable boom having the assembly.

The actuator mechanism having an actuator provides for a simple driving mechanism for boom section rotation. On the other hand, the actuator located inside or within the first frame structure of the first boom section and combined with the hinged elements connecting to both the first and the second boom sections supports maximum rotational movement between the first and second boom sections for allowing convenient extension and retraction of the boom. Also, a compact assembly is provided. The actuator and the folding hinge parts are protected from damage when boom is hitting an obstruction.

The second boom section may be provided with a second frame structure comprising a plurality of frame elements. Frame elements within at least one of the first and the second frame structures may be fixedly or detachably connected.

In the extended boom section arrangement, the first and second boom sections may be provided in linear boom section arrangement. In the retracted boom section arrangement, the first and second boom sections may be provided in an essentially parallel configuration.

The articulating joint may be provided in a corner section of each of the first and second boom sections, for example, adjacent corner boom sections of the first and second boom sections.

The actuator may be provided essentially in a middle or centre section of the first frame structure of the first boom section. The single actuator may be received in a mounting space provided inside the first frame structure of the first boom section.

The actuator mechanism may be made of a single actuator only.

The actuator is movable between an extracted position and a retracted position for driving the 180 degrees rotational movement or pivoting between the first and second boom sections. By the combination of the actuator and the hinged elements movement between the extracted and retracted positions of the actuator is transferred or translated into relocation of the first and second boom sections between the extended and the retracted positions.

The actuator is received inside the first frame structure of the first boom section for both the extended position and the retracted position.

The actuator is provided with a cylinder-piston arrangement. The hinged elements may connect to a rod or bar element moving between an extended and a retracted position in response to moving the piston within the cylinder in operation. The first lever element may be connected to the moving rod or bar element. The cylinder-piston arrangement may be of the hydraulic or pneumatic type of arrangement. Alternatively, the actuator may be an electric or a magnetic actuator configured to provide driving force for the 180 degrees rotational movement between the first and second boom sections.

The limiting device comprises a guiding mechanism configured to guide movement of at least one moving actuator element movable between a first and a second position in operation for producing the 180 degrees rotational movement between the first and second boom sections. The guiding mechanism may be configured to guide linear movement of the at least one moving actuator element. In an example, the moving actuator element may be connected to the piston of the cylinder-piston arrangement, for example, through a piston rod. The guiding mechanism is configured to prevent rotation or rotational movement (or pivoting) of the actuator in operation for driving the 180 degrees rotational movement between the first and second boom sections. The guiding mechanism may be provided with opposing guiding wall elements, the moving actuator element moving between such guiding wall elements in the process of driving the 180 degrees rotational movement. The moving actuator element may be received freely (essentially free of friction) movable between such guiding wall elements. Alternatively, there may be substantial friction between the moving actuator element and the guiding wall elements, thereby, providing a counter force with respect to the driving force provided by the actuator. At least in part the guiding mechanism may be provided inside the first frame structure of the first boom section. In an example, the single actuator and the guiding mechanism may be provided or located inside one and the same mounting space provided inside the first frame section.

For the guiding mechanism different embodiments can be provided. For example, the guiding of the moving actuator element, such as the rod, can have guiding wall members made of a polymer, for example HDPE (High-Density Polyethylene), HMPE (High-Modulus Polyethylene), UHMW (Ultra-High-Molecular-Weight Polyethylene), and Nylon. Also, the guiding wall members may be made of metal or metal alloy. Alternatively, a linear ball bearing can be used or a profile rail guide or a linear guide. Alternatively or in addition, a roller bearing, a needle bearing or a ball bearing rolling over a surface may be provided. Lubrication points for these bearings might be provided to expand life time and reduce friction.

The limiting device may comprise at least one stop member. The stop member which may comprise a clamp or mounting member may abut against a housing or some other element of the actuator.

The single actuator may be located within a mounting space or volume provided inside the first frame structure of the first boom section.

The actuator may be connected to the second boom section by a folding arm provided by the arrangement of the hinged elements and relocated between a stretched arm configuration and a folded arm configuration when the 180 degrees rotational movement between the first and second boom sections is applied. The folding arm may be provided with or may be made of at least two folding or link arm elements, wherein adjacent or neighboring folding or link arm elements are connected by a free articulating joint. In an example, the folding arm is made of (only) two folding or link arm elements. A serial arrangement of two or more folding or link arm elements may be provided. The wording "free articulating joint" as used here refers to an articulating joint not received on a support. Rather, the arm elements connected by the free articulating joint are free of movement limitations which may be caused by supporting the free articulating joint in a mounting or supporting point.

A hinged element may connect to the first boom section and the moving actuator element. The hinged element may be rotatable received on at least one of the first boom section and the moving actuator element. With respect to the connection to the first boom section, the hinged element may be connected to a mounting, a supporting or an attachment point provided on the first frame structure of the first boom section. For this or other embodiments, the first and second positions of the moving actuator element may refer to the extended and retractable boom positions.

The arrangement of the hinged elements may be made of (only) by two folding or link arm elements providing the folding arm and the hinged element connecting to the articulating joint connecting the two folding or link arm elements.

Embodiments of the arrangement may include bearings or ball heads at the positions of rotation axes of the arms / hinges, for less friction and longer life time. These bearings or ball heads may be equipped with maintenance points (grease nipples) for applying grease. Grease nipples can also be mounted to the rotation pins with grease coming in through the inside.

Each of the first and the second boom sections may be a sprayer boom section for an agricultural sprayer. Agricultural sprayers are used for distributing liquid material on the field, such as pesticide, herbicide, or fertilizer.

The examples disclosed above with regard to the assembly for the extendable and retractable boom may apply to the agricultural sprayer *mutatis mutandis.*

### Description of further embodiments

Following, further embodiments are described with referring to figures. In the figures show:
- Fig. 1: a schematic representation of a boom of an agricultural sprayer;
- Fig. 2: a schematic representation of an arrangement having a first boom section and a second boom section provided in an extended and a retracted boom section arrangement or orientation;
- Fig. 3: a schematic representation of another arrangement having a first boom section and a second boom section provided in an extended boom section arrangement or orientation;
- Fig. 4: a schematic representation of an arrangement having first and second boom sections provided in an extended position;
- Fig. 5: a schematic representation of the arrangement from Fig. 4 in an intermediate position;
- Fig. 6: another schematic representation of the arrangement from Fig. 4 in the intermediate position; and
- Fig. 7: a schematic representation of the arrangement from Fig. 4 in a retracted position.

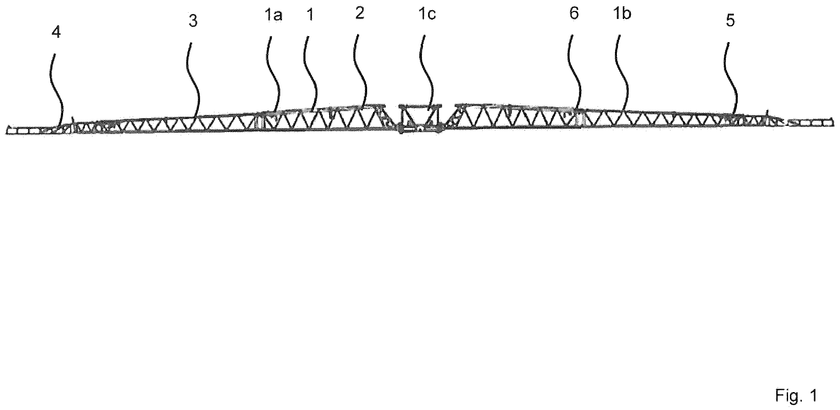

Fig. 1 shows a schematic representation of a boom 1 for an agricultural sprayer in an extended orientation which may also be referred to extended arrangement or extended position. The boom 1 may be applied to an agricultural sprayer which in turn may be provided or received on an implement to be carried or trailed by a tractor or a self-driving agricultural machine. The agricultural machine is provided with a tank or reservoir containing a product to be dispensed by spraying to the field. The tank will be in fluid communication with sprayer elements (not shown) provided on the boom 1 such as a nozzle system for dispensing the liquid material.

Fig. 1 show a rear view of the boom 1. The boom 1 comprises a plurality of boom sections 2, 3, 4 on one boom side 1a. According to the embodiment shown, there is a plurality of further boom sections on the other boom side 1b. The boom section 2 is connected to a middle (boom) section 1c.

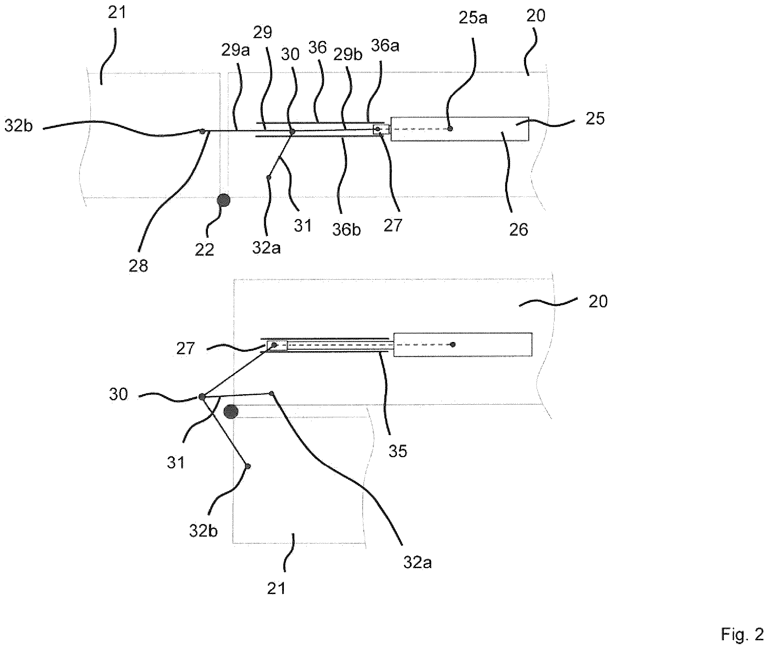

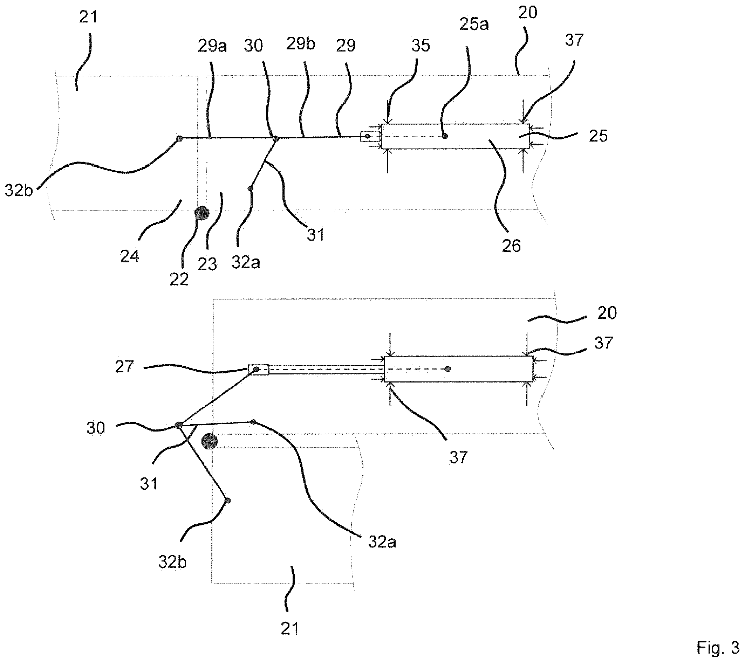

Referring to Fig. 2 and 3, different embodiments for an arrangement having a first and a second boom section 20, 21 are described. Such boom section may provide for two of the boom section 1c, 2, 3, and 4 in Fig. 1. For the boom shown in Fig. 1, such arrangement may be provided, with respect to the middle boom section 1c, in a distant location 5 and / or a proximal location 6. Thus, the middle boom section 1c may be connected to a proximal boom section

The first and second boom sections 20, 21 are connected by an articulating joint 22 provided in a corner section 23 of the first boom 20 and a corner section 24 of the second boom section 21, the first and second corner sections 23, 24 being provided adjacent to each other. The articulating joint 22 allows for a 180 degrees rotational movement between the first and second boom sections 20, 21 as shown in Fig. 2 to 4. By the rotational movement the arrangement with the first and second boom sections 20, 21 can be relocated between an extended boom section arrangement (orientation) shown in the top part of the Fig. 2 to 4 and a retracted boom section arrangement (orientation) shown in bottom part of the Fig. 2 to 4. Such relocation may also be referred to as movement between a linear boom section orientation (top) and a parallel boom section orientation (bottom).

The arrangement comprising the first and second boom sections 20, 21 is assigned an actuator 25 which is attached at least in a mounting or attachment point 25a and providing a driving force for the 180 degrees rotational movement or pivoting between the first and second boom sections 20, 21. In the embodiments shown the actuator 25 is provided with a cylinder-piston arrangement 26 having, for example, a hydraulic cylinder. Alternatively, an electric or a magnetic actuator may be provided. Embodiments may include a using a pneumatic cylinder as an actuator, or a differential cylinder, a synchronous cylinder, a tandem cylinder, a telescopic cylinder or a combination thereof.

According to the Fig. 2 and 3, a moving actuator element 27 can be moved between a retracted position (top) and an extended position (bottom). Movement of the movable actuator element 27 is applied to relocate the arrangement comprising the first and second boom sections 20, 21 between the extended and the retracted position.

The movable actuator element 27 is functionally connected to an arrangement of hinged elements 28 connecting to both the first and the second boom sections 20, 21. There is a folding arm 29 connecting to the movable actuator element 27 on one side and to the second boom section 21 on the other side. Folding or link arm elements 29a, 29b are connected by an articulating joint 30. The link arm elements 29a, 29b are provided in a serial arrangement.

For the arrangements shown in Fig. 2 and 3, there is a hinged element 31 provided with a lever element. The hinged element 31 is connected to the articulating joint 30 of the folding arm 29 and a first mounting (supporting or attachment) point 32a on the first boom section 20. The hinged (lever) element 31 is rotatable or pivotally received on both ends.

The folding arm 29 is connected to a second mounting (supporting or attachment) point 32b on the second boom section 21.

At least the first boom section 20 is having a first frame structure 20a provided by frame elements being connected fixedly or detachably. The actuator 25 is provided inside the first frame structure 20a of the first boom section 20, for example in a mounting space 34 provided inside or within the first frame structure 20a of the first boom section 20.

Also, the second boom section 21 is be provided with a second frame structure 21a comprising frame elements connected fixedly or detachably.

The attachment or mounting point 32 may be provided on the second frame structure 21a.

Referring to Fig. 2, the actuator 25 is prevented from rotation while the movable actuator element 27 is moved between the extended and retracted positions by a limiting or anti-rotation device 35. The limiting device 35 comprises a guiding mechanism 36 provided with guiding wall elements 36a, 36b receiving the movable actuator element 27 for guiding while the movable or moving actuator element 27 is moved between the extended and retracted positions, thereby, preventing the actuator 25 from rotation.

For the embodiment shown in Fig. 3, the limiting device 35 comprises one or more stop members 37 for preventing rotational movement of the actuator 25 in the process of moving the movable actuator element 27 between the extended and the retracted positions. The one or more stop members 37 acting against the actuator 25 are provided with limitation points or projections.

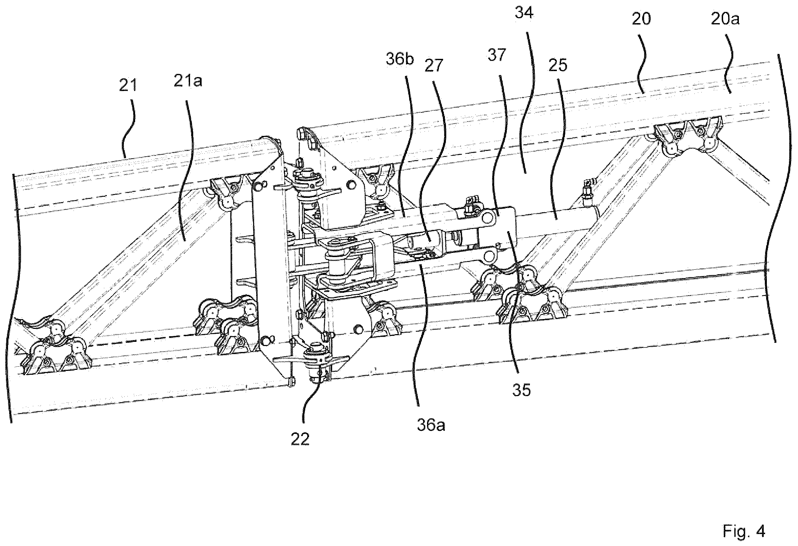

Fig. 4 to 7 show an embodiment for an arrangement schematically shown in Fig. 2. In Fig. 4 to 7 for the same features identical reference numerals are applied like in Fig. 2.

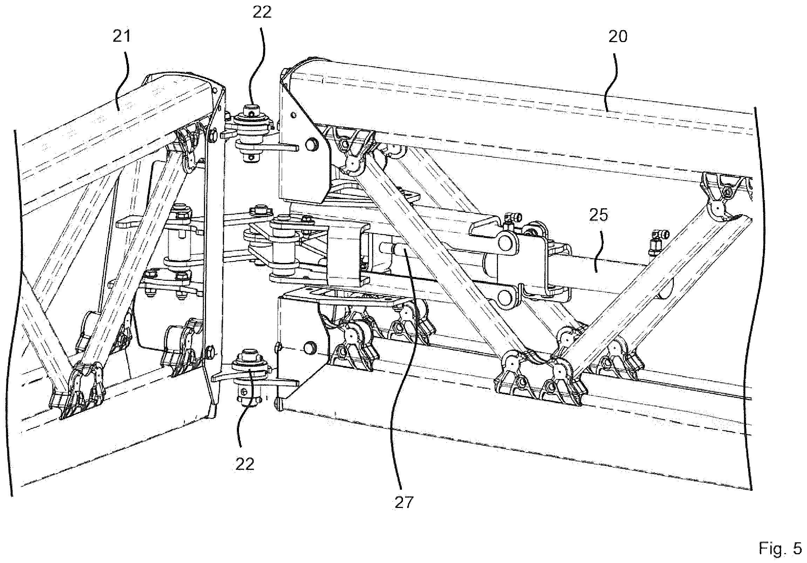

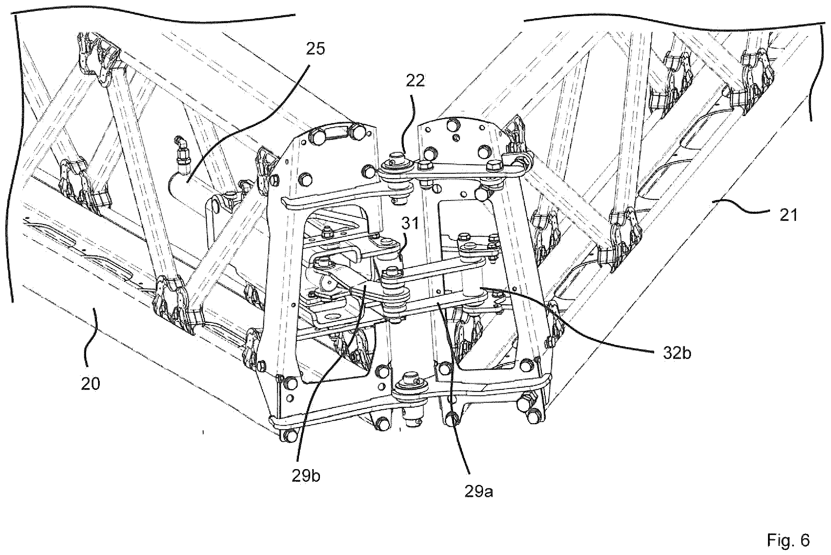

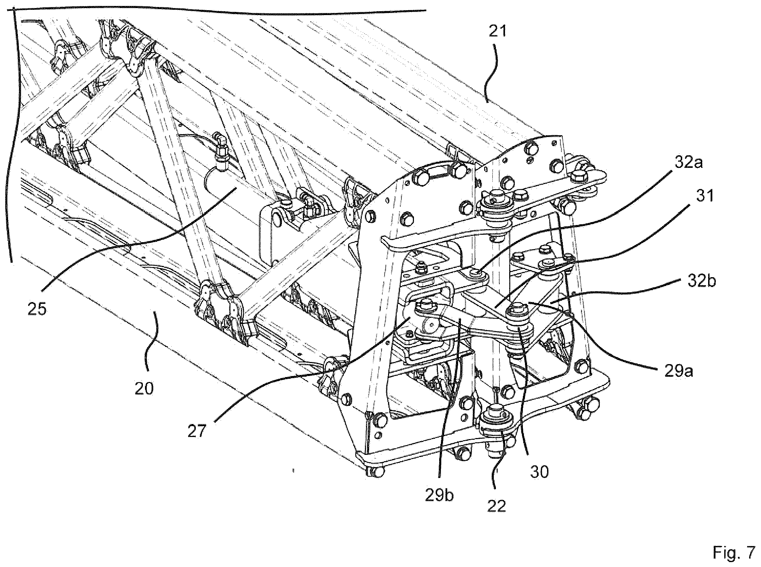

Fig. 4 shows the arrangement having the first and second boom sections 20, 21 in the (fully) extended position. In Fig. 5 and 6, the first and second boom sections 20, 21 are in an intermediate position (partially extended, partially retracted). Finally, Fig. 7 shows a (fully) retracted position for the first and second boom sections 20, 21.

The articulating joint 22 is provided in an upper and a lower part of the first and second boom sections 20, 21.

The actuator 25 is located inside the first frame structure 20a of the first boom section 20. The actuator is completely received inside a space spanned the first frame structure 20a. The second boom section 21 is provided with the second frame structure 21a receiving inside the second mounting (supporting or attachment) point 32b.

The stop member 37 abuts against the actuator 25 for preventing the actuator 25 from rotation.

Further, in the example shown, the movable actuator element 27 is guided by the guiding wall elements 36a, 36b above and underneath the movable actuator element 27 which may be sliding on the guiding wall elements 36a, 36b while moving between the retracted and the extended position. The guiding wall elements 36a, 36b are fixed on a frame which prevents the actuator element 27 (and the actuator 25) from rotation (see Fig. 2).

## Claims

1. An assembly for an extendable and retractable boom of an agricultural machine, comprising
- a first boom section (20) having a first frame structure (20a) comprising a plurality of frame elements;
- a second boom section (21) connected to the first boom section (20) by an articulating joint (22) configured to allow 180 degrees rotational movement between the first and second boom sections (20, 21), thereby, relocating the first and second boom sections (20, 21) between an extended boom section arrangement and a retracted boom section arrangement;
- an arrangement of hinged elements (28) connected to both the first and the second boom sections (20, 21);
- an actuator (25) provided with a cylinder-piston arrangement;
- an actuator mechanism, the actuator mechanism comprising the actuator (25) received inside the first frame structure of the first boom section (20) and functionally connected to the arrangement of hinged elements (28), wherein the actuator mechanism and the arrangement of hinged elements (28) are configured to produce the 180 degrees rotational movement between the first and second boom sections (20, 21), and the actuator (25) is configured to drive the 180 degrees rotational movement; and
- a limiting device (35);
wherein the actuator (25) provided with the cylinder-piston arrangement is prevented by the limiting device (35) from rotational movement while driving the 180 degrees rotational movement between the first and second boom sections (20, 21) and while moving a movable actuator element (27) between an extended and a retracted position; and
**characterized in that**
the limiting device (35) comprises a guiding mechanism (36) provided with guiding wall elements (36a, 36b) receiving the movable actuator element (27) for guiding while the movable actuator element (27) is moved between the extended and retracted positions, thereby, preventing the actuator (25) from rotation.

2. The assembly according to claim 1, wherein the actuator (25) is movable between an extracted and a retracted position for driving the 180 degrees rotational movement between the first and second boom sections (20, 21).

3. The assembly according to claim 1 or 2, wherein the limiting device (35) comprises a guiding mechanism (36) configured to guide movement of at least one moving actuator element (27) movable between a first and a second position in operation for producing the 180 degrees rotational movement between the first and second boom sections (20, 21).

4. The assembly according to at least one of the preceding claims, wherein the limiting device (35) comprises at least one stop member (37).

5. The assembly according to at least one of the preceding claims, wherein the actuator (25) is located within a mounting space (34) provided inside the first frame structure (20a) of the first boom section (20).

6. The assembly according to at least one of the preceding claims, wherein the actuator (25) is connected to the second boom section (21) by a folding arm (29a, 29b) provided by the arrangement of hinged elements (28) and relocated between a stretched arm configuration and a folded arm configuration when the 180 degrees rotational movement between the first and second boom sections (20, 21) is applied.

7. The assembly according to at least one of the preceding claims, referring to claim 6 wherein a hinged element (31) connects to the first boom section (20) and the moving actuator element (27).

8. The assembly according to at least one of the claims 1 to 7, wherein the single actuator is prevented from rotational movement while the single actuator is driving the 180 degrees rotational movement between the first and second boom sections.

9. The assembly according to at least one of the preceding claims, wherein each of the first and second boom sections (20, 21) is a sprayer boom section for an agricultural sprayer.

10. An agricultural sprayer, comprising an extendable and retractable boom having an assembly according to at least one of the preceding claims.

## Patentansprüche

1. Baugruppe für einen ausklappbaren und einklappbaren Ausleger einer landwirtschaftlichen Maschine, aufweisend
- einen ersten Auslegerabschnitt (20) aufweisend eine erste Rahmenstruktur (20a), welche eine Mehrzahl von Rahmenelementen aufweist;
- einen zweiten Auslegerabschnitt (21) verbunden mit dem ersten Auslegerabschnitt (20) durch eine Gelenkverbindung (22), welche dafür eingerichtet ist, eine Drehbewegung um 180 Grad zwischen dem ersten und dem zweiten Auslegerabschnitt (20, 21) zu ermöglichen, wodurch der erste und der zweite Auslegerabschnitt (20, 21) zwischen einer ausgeklappten Auslegerabschnittsanordnung und einer eingeklappten Auslegerabschnittanordnung verlagert werden;
- eine Anordnung von klappbaren Elementen (28), welche sowohl mit dem ersten als auch dem zweiten Auslegerabschnitt (20, 21) verbunden ist;
- ein Stellglied (25), welches mit einer Zylinder-Kolben-Anordnung versehen ist;
- einen Stellgliedmechanismus, wobei der Stellgliedmechanismus das Stellglied (25), welches im Inneren der ersten Rahmenstruktur des ersten Auslegerabschnitts (20) aufgenommen ist, aufweist und mit der Anordnung klappbarer Elemente (28) funktional verbunden ist, wobei der Stellgliedmechanismus und die Anordnung klappbarer Elemente (28) dafür eingerichtet sind, die Drehbewegung um 180 Grad zwischen dem ersten und dem zweiten Auslegerabschnitt (20, 21) zu erzeugen, und das Stellglied (25) dafür eingerichtet ist, die Drehbewegung um 180 Grad anzutreiben; und
- eine Begrenzungseinrichtung (35);
wobei durch die Begrenzungseinrichtung (35) eine Drehbewegung des Stellglieds (25), welches mit der Zylinder-Kolben-Anordnung versehen ist, verhindert wird, während dieses die Drehbewegung um 180 Grad zwischen dem ersten und dem zweiten Auslegerabschnitt (20, 21) antreibt und während ein bewegliches Stellgliedelement (27) zwischen einer ausgefahrenen und einer eingezogenen Position bewegt wird; und
**dadurch gekennzeichnet, dass** die Begrenzungseinrichtung (35) einen Führungsmechanismus (36) aufweist, welcher mit Führungswandelementen (36a, 36b) versehen ist, welche das bewegliche Stellgliedelement (27) zum Führen aufnehmen, während das bewegliche Stellgliedelement (27) zwischen der ausgefahrenen und der eingezogenen Position bewegt wird, wobei eine Drehung des Stellglieds (25) verhindert wird.

2. Baugruppe nach Anspruch 1, wobei das Stellglied (25) zwischen einer ausgefahrenen und einer eingezogenen Position bewegt werden kann, um die Drehbewegung um 180 Grad zwischen dem ersten und dem zweiten Auslegerabschnitt (20, 21) anzutreiben.

3. Baugruppe nach Anspruch 1 oder 2, wobei die Begrenzungseinrichtung (35) einen Führungsmechanismus (36) aufweist, welcher dafür eingerichtet ist, die Bewegung mindestens eines beweglichen Stellgliedelements (27) zu führe, welches im Betrieb zwischen einer ersten und einer zweiten Position bewegt werden kann, um die Drehbewegung um 180 Grad zwischen dem ersten und dem zweiten Auslegerabschnitt (20, 21) zu erzeugen.

4. Baugruppe nach mindestens einem der vorstehenden Ansprüche, wobei die Begrenzungseinrichtung (35) mindestens ein Anschlagelement (37) aufweist.

5. Baugruppe nach mindestens einem der vorstehenden Ansprüche, wobei das Stellglied (25) innerhalb eines Einbauraums (34), welcher innerhalb der ersten Rahmenstruktur (20a) des ersten Auslegerabschnitts (20) bereitgestellt ist, angeordnet ist.

6. Baugruppe nach mindestens einem der vorstehenden Ansprüche, wobei das Stellglied (25) durch einen Gelenkarm (29a, 29b), welcher durch die Anordnung von klappbaren Elementen (28) bereitgestellt ist, mit dem zweiten Auslegerabschnitt (21) verbunden ist und zwischen einer ausgestreckten Armkonfiguration und einer eingeklappten Armkonfiguration bewegt wird, wenn die Drehbewegung um 180 Grad zwischen dem ersten und dem zweiten Auslegerabschnitt (20, 21) ausgeübt wird.

7. Baugruppe nach mindestens einem der vorstehenden Ansprüche, rückbezogen auf Anspruch 6, wobei ein klappbares Element (31) mit dem ersten Auslegerabschnitt (20) und dem beweglichen Stellgliedelement (27) verbunden ist.

8. Baugruppe nach mindestens einem der Ansprüche 1 bis 7, wobei das einzelne Stellglied an einer Drehbewegung gehindert wird, während das einzelne Stellglied die Drehbewegung um 180 Grad zwischen dem ersten und dem zweiten Auslegerabschnitt antreibt.

9. Baugruppe nach mindestens einem der vorstehenden Ansprüche, wobei jeder der ersten und zweiten Auslegerabschnitte ein Sprühauslegerabschnitt für eine landwirtschaftliche Feldspritze ist.

10. Landwirtschaftliche Feldspritze, aufweisend einen ausklappbaren und einklappbaren Ausleger aufweisend eine Baugruppe nach mindestens einem der vorstehenden Ansprüche.

## Revendications

1. Ensemble pour flèche extensible et rétractable d'une machine agricole, comprenant
- une première section de flèche (20) ayant une première structure de cadre (20a) comprenant une pluralité d'éléments de cadre ;
- une seconde section de flèche (21) connectée à la première section de flèche (20) par une jointure d'articulation (22) configurée pour permettre un mouvement rotationnel de 180 degrés entre les première et seconde sections de flèche (20,21), en relocalisant ainsi les première et seconde sections de flèche (20,21) entre un dispositif de section de flèche et un dispositif de section de flèche rétracté ;
- un dispositif d'éléments articulés (28) connecté à la fois aux première et seconde sections de flèche (20,21) ;
- un actionneur (25) pourvu d'un dispositif de cylindre et piston ;
- un mécanisme d'actionnement, le mécanisme d'actionnement comprenant l'actionneur (25) reçu à l'intérieur de la première structure de cadre de la première section de flèche (20) et connecté fonctionnellement au dispositif d'éléments articulés (28), le mécanisme d'actionnement et le dispositif d'éléments articulés (28) étant configurés pour produire le mouvement rotationnel de 180 degrés entre les première et seconde sections de flèche (20,21), l'actionneur (25) étant configuré pour entraîner le mouvement rotationnel de 180 degrés ; et
- un dispositif limiteur (35) ;
l'actionneur (25) pourvu du dispositif de cylindre et piston étant empêché par le dispositif limiteur (35) d'exécuter un mouvement rotationnel pendant l'entraînement du mouvement rotationnel de 180 degrés entre les première et seconde sections de flèche (20,21), et pendant le mouvement d'un élément actionneur mobile (27) entre une position étendue et une position rétractée ; et
**caractérisé en ce que** le dispositif limiteur (35) comprend un mécanisme de guidage (36) pourvu d'éléments de paroi de guidage (36a, 36b) recevant l'élément actionneur mobile (27) pour le guidage pendant que l'élément actionneur mobile (27) est déplacé entre les positions étendue et rétractée en empêchant ainsi l'actionneur (25) de tourner.

2. Ensemble selon la revendication 1, dans lequel l'actionneur (25) est mobile entre une position extraite et une position rétractée pour entraîner le mouvement rotationnel de 180 degrés entre les première et seconde sections de flèche (20,21).

3. Ensemble selon la revendication 1 ou 2, dans lequel le dispositif limiteur (35) comprend un mécanisme de guidage (36) configuré pour guider le mouvement d'au moins un élément actionneur mobile (27) mobile entre une première et une seconde position en fonctionnement pour produire le mouvement rotationnel de 180 degrés entre les première et seconde sections de flèche (20,21).

4. Ensemble selon l'une quelconque des revendications précédentes, dans lequel le dispositif limiteur (35) comprend au moins un élément d'arrêt (37).

5. Ensemble selon l'une quelconque des revendications précédentes, dans lequel l'actionneur (25) se trouve dans un espace de montage (34) prévu à l'intérieur de la première structure de cadre (20a) de la première section de flèche (20).

6. Ensemble selon l'une quelconque des revendications précédentes, dans lequel l'actionneur (25) est connecté à la seconde section de flèche (21) par un bras pliant (29a, 29b) créé par l'agencement d'éléments articulés (28) et relocalisé entre une configuration de bras étirée et une configuration de bras repliée lorsque le mouvement rotationnel de 180 degrés entre les première et seconde sections de flèche (20,21) est appliqué.

7. Ensemble selon l'une quelconque des revendications précédentes, en référence à la revendication 6, dans lequel un élément articulé (31) est connecté à la première section de flèche (20) et à l'élément actionneur mobile (27).

8. Ensemble selon l'une quelconque des revendications 1 à 7, dans lequel l'actionneur unique est empêché d'exécuter un mouvement rotationnel pendant que l'actionneur unique entraîne le mouvement rotationnel de 180 degrés entre les première et seconde sections de flèche.

9. Ensemble selon l'une quelconque des revendications précédentes, dans lequel chacune des première et seconde sections de flèche (20,21) est une section de flèche de pulvérisation pour un pulvérisateur agricole.

10. Pulvérisateur agricole, comprenant une flèche extensible et rétractable comportant un ensemble selon au moins une des revendications précédentes.
